# NEW EUROPEAN PATENT SPECIFICATION

(11) **EP 2 874 277 B2**
(45) Date of publication and mention of the opposition decision: **01.06.2022**
(45) Mention of the grant of the patent: 27.12.2017
(21) Application number: 14192976.0
(22) Date of filing: 13.11.2014
(51) Int. Cl.: H02K 1/14, H02K 21/14, H02K 3/28

(54) **Modular electric machine**
Modulare Elektrische Maschine
Machine électrique modulaire

(30) Priority: 15.11.2013 JP 2013236923
(43) Date of publication of application: 20.05.2015
(73) Proprietor: AISIN SEIKI KABUSHIKI KAISHA, Kariya-shi, Aichi 448-8650 (JP)
(72) Inventor: Nakano, Takumi, Kariya-shi, Aichi 448-8650 (JP); Matsumoto, Takeru, Kariya-shi, Aichi 448-8650 (JP); Miyata, Daisuke, Kariya-shi, Aichi 448-8650 (JP)
(74) Representative: TBK

(56) References cited:
- EP-A2- 1 067 003
- WO-A1-97/26700
- DE-A1-102008 054 527

## Description

This disclosure relates to the structure of a rotary electric machine according to the preamble of claim 1, the features of which are known from e.g. document DE 10 2008 054527 A1.

In the related art, JP 2008-278691A discloses a brushless motor that employs split cores, which are obtained by dividing a stator on which a coil is wound into plural pieces. For example, the split cores are divided for each tooth on which a coil is wound. Accordingly, the split cores are used as means for allowing coils to be easily wound and improving the performance of a motor by increasing a space factor.

However, in the case of a brushless motor using split cores in the related art, the respective split cores are annularly arrayed and the state of the array needs to be maintained. For this reason, work for fixing the split cores, such as work for fixing the split cores on the inner peripheral side of an annular housing by using shrinkage fitting or an adhesive or work for joining the split cores by performing welding on the side surface or the like of the respective split cores, has been needed. This work has caused an increase in the number of components or an increase of the assembly man-hours for a brushless motor.

Thus, a need exists for a rotary electric machine that allows the reduction of the number of components or the reduction of assembly man-hours, and it is the object of the invention to provide such a rotary electric machine.
The object of the invention is achieved by a rotary electric machine according to claim 1. Advantageous embodiments are carried out according to the dependent claims.

An aspect of the disclosure is directed to a rotary electric machine including: a stator including a plurality of stator pieces in which phase coils are wound on teeth protruding from a plurality of split cores and which are annularly arrayed around an axis in a circumferential direction; and a rotor that is disposed coaxially with the stator so as to face the stator. The stator includes a plurality of annular plate-shaped bus bars that supply power to the phase coils corresponding to the kinds of phases, are joined to the plurality of stator pieces corresponding to the respective phases, and maintain an annular array of the plurality of split cores. According to this aspect, the bus bars are joined to the split cores so as to maintain the annular array of the respective split cores. That is, the array of the respective stator pieces is fixed by the bus bars, so that the annular shape of the stator can be maintained. Further, the bus bars can maintain the annular shape of the stator and can supply power to each phase coil for each phase. Accordingly, when the split cores are joined by the bus bars, it is possible to simultaneously achieve both a function of fixing the split cores and a power supply function, which can contribute to the reduction of the number of components and the reduction of assembly man-hours for the rotary electric machine.

The plurality of bus bars of the rotary electric machine according to the aspect of this disclosure may be disposed so as to be distributed on one end face and on the other end face of the stator. According to this configuration, since the bus bars maintaining the annular array of the stator pieces are present on one end face and on the other end face of the stator and fix the annular array from one end side and the other side, it is possible to more firmly maintain the annular array of the stator.

The plurality of bus bars of the rotary electric machine according to the aspect of this disclosure may include a U-phase bus bar, a V-phase bus bar, a W-phase bus bar, and a common bus bar. The U-phase bus bar, the V-phase bus bar, and the W-phase bus bar may be disposed on one of one end face and on the other end face of the stator and the common bus bar may be disposed on the other side thereof. According to this configuration, all of the U-phase bus bar, the V-phase bus bar, and the W-phase bus bar are disposed on one of one end face and on the other end face of the stator. As a result, one end of each stator piece is joined and fixed by any one of the bus bars. Likewise, on the other side of the stator, the other end of each stator piece is joined and fixed by the common bus bar. That is, since both ends of all stator pieces are joined and fixed by the bus bars, it is possible to more firmly maintain the annular array of the stator with good balance. Further, since the number of joint points between the bus bars and the stator pieces can be distributed on one end face and on the other end face, joining is easily performed in comparison with a case in which all bus bars are disposed on one side of the stator, which can contribute to the reduction of working man-hours.

The U-phase bus bar, the V-phase bus bar, the W-phase bus bar, and the common bus bar of the rotary electric machine according to the aspect of this disclosure may be joined to end portions of the phase coils, which serve as connection targets, on inner peripheral sides of the end faces of the stator. According to this configuration, since it is possible to hinder a joint portion between the bus bar and the stator piece from protruding from the outer diameter of the stator, it is possible to contribute to the suppression of an increase in the size of the rotary electric machine.

The stator pieces of the rotary electric machine according to the aspect of this disclosure may include insulators that support the phase coils, and terminals that are implanted in the insulators and may be electrically connected to end portions of the phase coils, and the bus bars may include joints that correspond to the positions of the phase coils serving as connection targets, the joints of the bus bars may be joined to the terminals of the stator pieces corresponding to the phases, and the bus bars may maintain the annular array of the plurality of split cores. According to this configuration, it is possible to supply power to the phase coils and firmly fix the terminals to the stator pieces for the maintenance of the annular shape of the stator at the same time by merely joining the terminals to the bus bars, which can contribute to the reduction of the number of components and the reduction of assembly man-hours for the rotary electric machine.

The stator pieces of the rotary electric machine according to the aspect of this disclosure may include insulators that support the phase coils, the bus bars may include joints that correspond to the positions of the phase coils serving as connection targets, the joints of the bus bars may be joined to a part of the insulators of the stator pieces corresponding to the phases, and the bus bars may maintain the annular array of the plurality of split cores and the joints may be electrically connected to end portions of the phase coils corresponding to the joints. According to this configuration, the joints of the bus bar are directly joined to the insulator, and end portions of the phase coils are electrically connected to the joints. As a result, the stator piece does not need to be provided with a member that relays the end portion of the phase coil, which can contribute to the reduction of the number of components and the reduction of assembly man-hours.

The rotary electric machine according to the aspect of this disclosure may further include an annular positioning member that is inserted between the end face of the stator and the bus bar and includes alignment guide portions aligning the plurality of stator pieces, which form the stator, in an annular shape. According to this configuration, since the respective stator pieces, which are not yet joined to the bus bar, are easily arrayed in an annular shape by the alignment guide portions, assembling efficiency can be improved.

The positioning member of the rotary electric machine according to the aspect of this disclosure may include phase determining portions that determine phases of the stator pieces and the bus bars corresponding to the phases. According to this configuration, the positions of the stator pieces, which are annularly arrayed by the alignment guide portions, relative to the bus bars of which phases are determined by the phase determining portions, can be accurately determined by the positioning member. As a result, the stator can be made robust by the high-accuracy annular array of the stator pieces.

The plurality of bus bars of the rotary electric machine according to the aspect of this disclosure may include a U-phase bus bar, a V-phase bus bar, a W-phase bus bar, and a common bus bar. Further, when the common bus bar and at least one of the U-phase bus bar, the V-phase bus bar, and the W-phase bus bar are disposed on one of the end portions of the stator, common-side end portions of the common bus bar and the phase coils may be connected on one of the outer peripheral side and the inside of the stator and non-common-side end portions of the other bus bars and the phase coils may be connected on the inside or the outside of a connection position of the common bus bar at end portions of the stator. According to this configuration, even through the common bus bar and the other bus bars are disposed on one of the end portions of the stator, the joint has a double structure. Accordingly, the common bus bar and other bus bars can be disposed without interfering with each other. As a result, the variation of the position to which the joint is joined is increased, which can contribute to an increase in the degree of freedom in design.

### BRIEF DESCRIPTION OF THE DRAWINGS

The foregoing and additional features and characteristics of this disclosure will become more apparent from the following detailed description considered with the reference to the accompanying drawings, wherein:
Fig. 1 is a cross-sectional view of a rotary electric machine according to an embodiment;
Fig. 2 is a perspective view of a stator of the rotary electric machine according to the embodiment;
Fig. 3 is an exploded perspective view of a split core assembly that forms the stator of the rotary electric machine according to the embodiment;
Fig. 4 is a perspective view of a phase coil that forms the stator of the rotary electric machine according to the embodiment;
Fig. 5 is a perspective view of a stator piece that forms the stator of the rotary electric machine according to the embodiment;
Fig. 6 is an exploded perspective view of the stator of the rotary electric machine according to the embodiment;
Fig. 7 is a perspective view of an annular array of the stator pieces that form the stator of the rotary electric machine according to the embodiment when viewed from a side on which a common bus bar is disposed;
Fig. 8 is a perspective view of the annular array of the stator pieces that form the stator of the rotary electric machine according to the embodiment when viewed from a side on which a U-phase bus bar, a V-phase bus bar, and a W-phase bus bar are disposed;
Figs. 9A to 9F are perspective views of a U-phase bus bar, a V-phase bus bar, a W-phase bus bar, insulating rings, and a positioning member, which are disposed so as to be laminated, of the stator of the rotary electric machine according to the embodiment;
Figs. 10A and 10B are perspective views of the common bus bar and the positioning member, which are disposed so as to be laminated, of the stator of the rotary electric machine according to the embodiment;
Figs. 11A to 11C are a top view, a side view, and a bottom view showing a state in which the stator pieces forming the stator of the rotary electric machine according to the embodiment are annularly arrayed and fixed by the bus bars;
Figs. 12A and 12B are partially enlarged views illustrating a side, on which the common bus bar is disposed, of a positioning member that guides the annular array of the stator pieces forming the stator of the rotary electric machine according to the embodiment;
Figs. 13A and 13B are partially enlarged views illustrating a side, on which the U-phase bus bar, the V-phase bus bar, and the W-phase bus bar are disposed, of the positioning member that guides the annular array of the stator pieces forming the stator of the rotary electric machine according to the embodiment;
Fig. 14 is a perspective view illustrating another embodiment for maintaining the annular array of the stator pieces that form the stator of the rotary electric machine according to the embodiment; and
Fig. 15 is a perspective view illustrating a variation of the disposition of bus bars maintaining the annular array of the stator pieces that form the stator of the rotary electric machine according to the embodiment.

### DETAILED DESCRIPTION

Exemplary embodiments disclosed here will be disclosed below. Structures of the embodiments to be described below and the operations and results (effects) obtained from the structures are merely exemplary. The embodiments can also be embodied by structures other than the structures disclosed in the following embodiments, and can obtain various effects (including derivative effects) obtained from the basic structure.

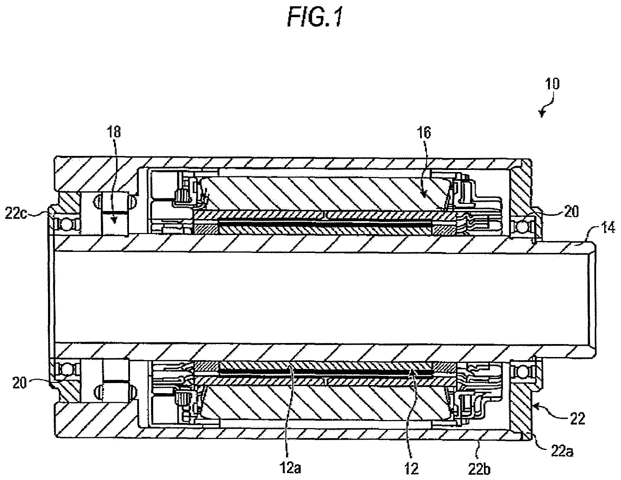

Fig. 1 is a schematic cross-sectional view of a brushless motor 10 as an example of a rotary electric machine of this embodiment. The brushless motor 10 of Fig. 1 has an inner rotor type structure as an example. The brushless motor 10 includes a rotating shaft 14 that is integrated with a rotor 12, a stator 16 that is disposed so as to surround the rotor 12, and a rotation detecting unit 18 that detects the rotation angle (position) of the rotor 12 or the rotating shaft 14, as main components.

The rotor 12 includes a permanent magnet 12a that is fixed to, for example, the outer peripheral surface of the rotating shaft 14 along a circumferential direction of the rotating shaft, and the permanent magnet 12a is magnetized so that S poles and N poles are alternately arranged in the circumferential direction of the rotating shaft 14. Meanwhile, the rotor 12 may be a rotor in which the permanent magnet 12a is embedded.

The rotating shaft 14 is made of metal in the shape of, for example, a hollow cylinder, and is supported by a housing 22 with a bearing 20 interposed therebetween. The housing 22 is made of, for example, a resin and includes an upper lid 22a, an outer wall portion 22b, and a bottom lid 22c. The housing 22 receives the rotor 12, the rotating shaft 14, the stator 16, the rotation detecting unit 18, and the like. As described below, the stator 16 includes a plurality of stator pieces annularly arrayed so as to form the shape of a hollow cylinder and includes the rotor 12 and the rotating shaft 14 on the inner peripheral side of the stator. That is, the rotor 12 is disposed coaxially with the stator 16 so as to face the stator 16.

The rotation detecting unit 18 can use, for example, a resolver, and detects a rotation angle of the rotating shaft 14. Further, in another embodiment, a Hall element can also be used as the rotation detecting unit 18. In all cases, the rotation state of the rotating shaft 14 or the rotor 12 is detected, and is used when a state in which power is supplied to a plurality of phase coils, for example, a U phase coil, a V phase coil, and a W phase coil, forming the stator 16 is switched. A rotating magnetic field is generated in the stator 16 by the switching of the state in which power is supplied to the phase coils. As a result, the rotor 12 is rotated relative to the stator 16 by an interaction between the rotating magnetic field and a magnetic field of the permanent magnet of the rotor 12. Meanwhile, when a Hall element is used as the rotation detecting unit 18, the Hall element can be disposed near the rotor 12 since the Hall element has a small size and has a degree of freedom in a disposition space. In this case, the use of the Hall element as the rotation detecting unit 18 can contribute to the reduction of the length of the brushless motor 10 in an axial direction.

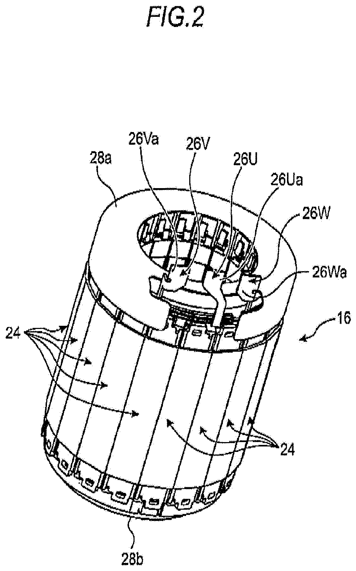

Fig. 2 is a perspective view of the stator 16. As described above, the stator 16 of the brushless motor 10 of this embodiment has a structure in which a plurality of stator pieces 24 are annularly arrayed around an axis (the center of the rotating shaft 14) in a circumferential direction. In the case of this embodiment, U-phase stator pieces 24, V-phase stator pieces 24, and W-phase stator pieces 24 are present, and six U-phase stator pieces 24, six V-phase stator pieces 24, and six W-phase stator pieces 24, that is, a total of eighteen stator pieces 24, are annularly arrayed. Further, the stator pieces 24 are fixed by a U-phase bus bar 26U, a V-phase bus bar 26V, a W-phase bus bar 26W, and a common bus bar 26C (not shown) supplying power to the respective phase coils so that the state of the annular array of the stator piece 24 is maintained. Meanwhile, when not particularly distinguished, the U-phase bus bar 26U, the V-phase bus bar 26V, the W-phase bus bar 26W, and the common bus bar (26C) are simply referred to as the bus bars 26.

In Fig. 2, the U-phase bus bar 26U, the V-phase bus bar 26V, and the W-phase bus bar 26W are disposed at one end of the stator 16 (the upper surface in Fig. 2). A power supply terminal 26Ua of the U-phase bus bar 26U, a power supply terminal 26Va of the V-phase bus bar 26V, and a power supply terminal 26Wa of the W-phase bus bar 26W are exposed to the outside from a cutout of an insulating cover 28a made of, for example, a polyamide resin or the like, and are connected to a power supply line (not shown). Meanwhile, most portions of the bus bars 26 except for the power supply terminals 26Ua, 26Va, and 26Wa are covered with the insulating cover 28a, so that the insulating property of each bus bar 26 is improved. Likewise, an insulating cover 28b made of, for example, a polyamide resin is disposed on the other end side of the stator 16 (the lower surface in Fig. 2), so that the insulating property of the common bus bar 26C (not shown) is improved.

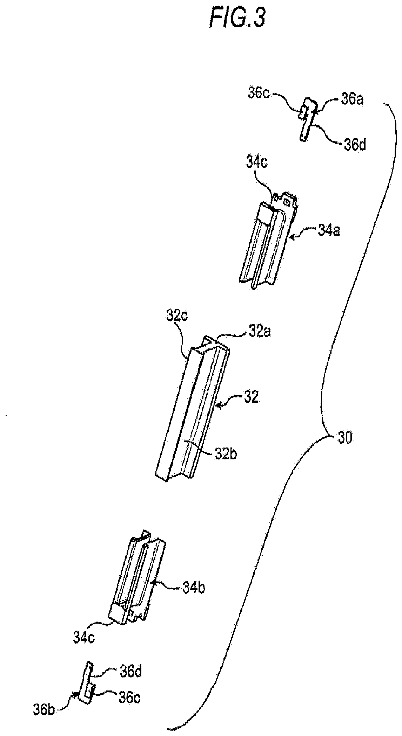

Fig. 3 is an exploded perspective view of a split core assembly 30 that forms the stator piece 24. The split core assembly 30 includes a split core 32, split insulators 34a and 34b, and terminals 36a and 36b.

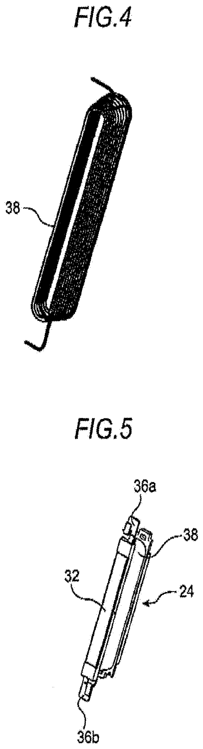

A laminate core, which is obtained by laminating a plurality of, for example, substantially T-shaped thin electromagnetic steel plates and joining the thin electromagnetic steel plates by welding or the like to integrate the thin electromagnetic steel plates, can be used as the split core 32. Both substantially T-shaped arm portions of the split core 32 form a yoke 32a, are joined to yokes 32a of adjacent split cores 32 when the stator pieces 24 are annularly arrayed, and form a magnetic path. A substantially T-shaped foot portion of the split core 32 form a tooth 32b, and a wire is wound on the tooth 32b a predetermined number of times with the split insulators 34a and 34b, which are mounted on the tooth, interposed therebetween so as to form a phase coil 38 having the shape shown in Fig. 4. Since the tooth 32b of the split core 32 is independent and does not interfere with other teeth 32b when a wire is wound, a wire can be easily wound densely. Accordingly, it is possible to increase a space factor in a slot that is formed between the adjacent teeth 32b when the stator pieces 24 are annularly arrayed.

The split insulators 34a and 34b are made of, for example, a polyamide resin, and function as insulating members that improve an insulating property between the tooth 32b and the wire wound on the tooth 32b. Further, the split insulators 34a and 34b function as support members that support the terminals 36a and 36b. The terminals 36a and 36b function as terminals that are electrically connected to the phase coil 38. The split insulators 34a and 34b can be formed of resin members that are formed so as to cover portions of the tooth 32b coming into contact with the wire wound on the tooth 32b, that is, side surfaces of the tooth 32b, side surfaces of a portion of the yoke 32a connected to the tooth 32b, and side surfaces of a portion, which is connected to the tooth 32b, of a flange 32c formed at an end portion of the tooth 32b. When the split insulators 34a and 34b are formed of two divided members as in this embodiment, the split insulators 34a and 34b can be mounted on the tooth from both ends of the split core 32 and can cover the entire surface of the tooth coming into contact with the wire.

A metal material, such as a copper plate or a copper alloy plate, is formed in a predetermined shape by punching and a hook portion 36c catching an end portion of the phase coil 38 is then formed by bending or the like, so that each of the terminals 36a and 36b is formed. Further, after leg portions 36d are press-fitted or inserted into fixing holes 34c formed at the split insulators 34a and 34b, adhesion, welding, or the like is performed. Accordingly, the leg portions 36d are firmly fixed to the split insulators 34a and 34b. Meanwhile, for example, claw portions are formed at portions of the terminals 36a and 36b that are inserted into the fixing holes 34c so that the terminals do not easily fall off from the fixing holes 34c. Furthermore, after being inserted into the hook portion 36c from the side, an end portion of the phase coil 38 is firmly fixed to the hook portion by, for example, welding (as an example, fusing welding or thermal caulking).

As shown in Fig. 3, the split insulator 34a mounted on one side of the split core 32 and the split insulator 34b mounted on the other side of the split core 32 can be formed of components having the same shape. Further, the terminals 36a and 36b, which are mounted on the split insulators 34a and 34b, can also be formed of components having the same shape. That is, components can be shared, which can contribute to the reduction of manufacturing cost.

Meanwhile, in the case of this embodiment, the fixing holes 34c are formed at portions of the split insulators 34a and 34b close to the flange 32c of the split core 32, that is, close to the inner peripheral side of the stator when the stator pieces 24 are annularly arrayed to form the annular stator 16. In the case of this embodiment, U-phase coils 38, V-phase coils 38, and W-phase phase coils 38 are star-connected and the respective end portions of the phase coil 38 are electrically connected to the terminals 36a and 36b. A neutral point-side end portion of each phase coil 38 is connected to the terminal 36b, and a non-neutral point-side portion of each phase coil 38 is connected to the terminal 36a. Furthermore, the terminals 36a and 36b function as fixing members that maintain the state of the array by being joined to the bus bars 26 and integrate the stator pieces 24 by firmly fixing the stator pieces 24 when the plurality of stator pieces 24 are annularly arrayed.

After the split core assembly 30 shown in Fig. 3 is completed, a wire (magnet wire) is wound on the tooth 32b on which the split insulators 34a and 34b have been mounted so as to be formed in a shape shown in Fig. 4. Further, end portions of the wire are caught by the terminals 36a and 36b and are fixed to the terminals by fusing welding or the like as described above, so that the stator piece 24 shown in Fig. 5 is completed. Meanwhile, in this embodiment, eighteen stator pieces 24 shown in Fig. 5 are prepared and annularly arrayed to form the stator 16.

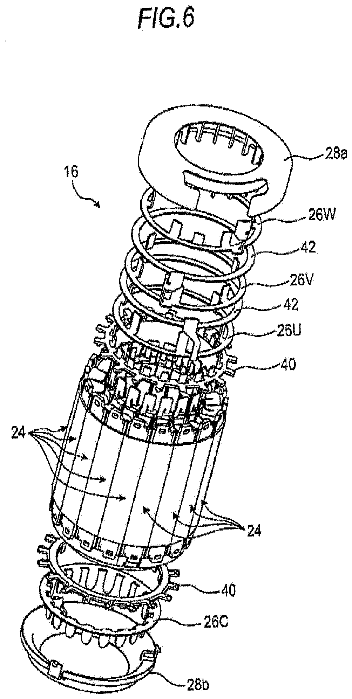

Fig. 6 is an exploded perspective view of the stator 16. In the stator 16 of this embodiment, a positioning member 40, the U-phase bus bar 26U, an insulating ring 42, the V-phase bus bar 26V, an insulating ring 42, the W-phase bus bar 26W, and the insulating cover 28a are disposed so as to be laminated in this order on one end side of the annular array of the eighteen stator pieces 24. Meanwhile, a positioning member 40, the common bus bar 26C, and the insulating cover 28b are disposed so as to be laminated in this order on the other end side of the annular array.

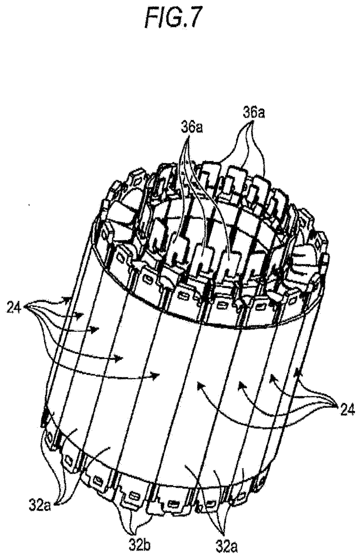

Fig. 7 is a perspective view showing a state in which the stator pieces 24 are annularly arrayed. Since both end portions of the yoke 32a of the split core 32 of each stator piece 24 are exposed to the outside without being covered with the split insulators 34a and 34b as described above, end portions of the yokes 32a come into contact with each other when the stator pieces are annularly arrayed. Accordingly, a good magnetic path is formed. The annular array accuracy of the stator pieces 24 is determined depending on the shape of the contact surfaces of the yokes 32a of the split cores 32 that come into contact with each other when the stator pieces are arrayed. Accordingly, the terminals 36a and 36b of the split insulators 34a and 34b, which are mounted on the split cores 32, are also annularly arrayed with an accuracy corresponding to the array accuracy of the stator pieces 24. However, since each stator piece 24 is not restricted at all in this state, the annular array cannot be maintained.

In this embodiment, as described above, the bus bars 26, which supply power to the phase coils 38 of the respective stator pieces 24, are used as a fixing framework for the stator pieces 24 and fix and support the stator pieces 24 from both end faces of the stator pieces 24. Accordingly, the separate stator pieces 24 are formed into an integrated annular array.

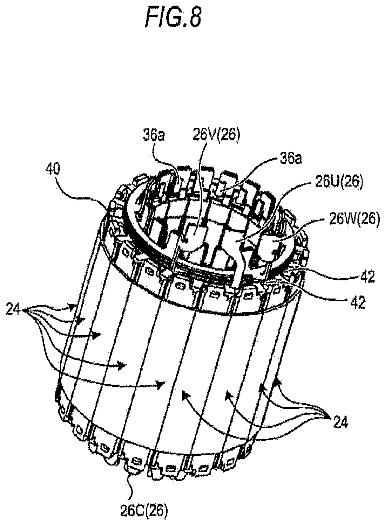

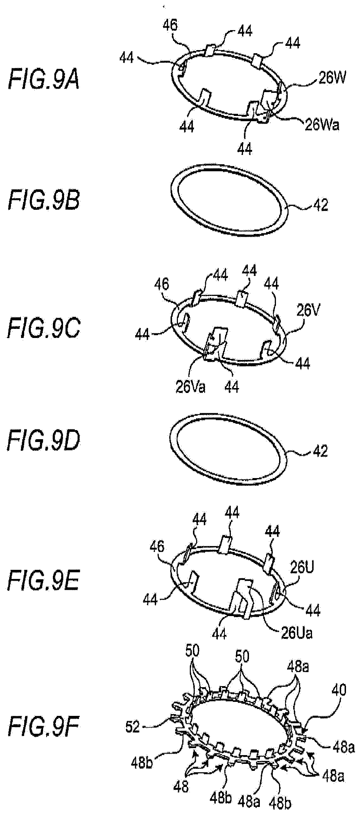

Fig. 8 shows a state in which the positioning member 40, the U-phase bus bar 26U, the insulating ring 42, the V-phase bus bar 26V, the insulating ring 42, and the W-phase bus bar 26W are laminated in this order on one end side of the annular array of the stator pieces 24 and integrally join the stator pieces 24. That is, Fig. 8 shows a state in which joints 44 (see Figs. 9A to 9F) of the respective bus bars 26 are firmly joined to the terminals 36a of the respective stator pieces 24 by, for example, welding (as an example, projection welding or the like).

In this embodiment, one ends of the plurality of stator pieces 24, that is, the plurality of split cores 32 are fixed by the U-phase bus bar 26U, the V-phase bus bar 26V, and the W-phase bus bar 26W. Likewise, the other ends of the stator pieces are fixed by the common bus bar 26C (of which a part is shown). As a result, the plurality of stator pieces 24, that is, the plurality of split cores 32, are firmly fixed (fastened) to each other, so that a firm annular array shape can be obtained. Meanwhile, as described above, the terminals 36a and 36b are also annularly arrayed when the stator pieces 24 (the split cores 32) are annularly arrayed. Accordingly, it is possible to smoothly perform welding between the bus bar 26 and each terminal 36a or 36b. Further, in this embodiment, the W-phase bus bar 26W, the V-phase bus bar 26V, the U-phase bus bar 26U, and the common bus bar 26C are not collectively disposed on one side of the stator pieces 24 that are annularly arrayed, and the bus bars 26 are distributed so that the W-phase bus bar 26W, the V-phase bus bar 26V, and U-phase bus bar 26U are disposed on one side of the stator pieces 24 and the common bus bar 26C is disposed on the other side thereof. As a result, each of the terminals 36a and 36b has a marginal space in the annular array direction. Accordingly, it is possible to increase the width of the terminal 36a or 36b in the annular array direction or to increase an interval between each of the terminals 36a and the terminals 36b. As a result, joining (welding) between the respective bus bars 26 (the joints 44) and the terminals 36a and 36b becomes easy, which can contribute to the improvement of working efficiency.

Figs. 9A to 9F are perspective views showing the shapes of the bus bars 26 that are disposed on one end side of the stator pieces 24 and are used to integrate the plurality of stator pieces 24 in an annular shape, the shapes of the insulating rings 42 that insulate adjacent bus bars 26 from each other, and the shape of the positioning member 40. Specifically, the W-phase bus bar 26W shown in Fig. 9A, the insulating ring 42 shown in Fig. 9B, the V-phase bus bar 26V shown in Fig. 9C, the insulating ring 42 shown in Fig. 9D, the U-phase bus bar 26U shown in Fig. 9E, and the positioning member 40 shown in Fig. 9F are shown in this order from the upper layer side of the lamination. The W-phase bus bar 26W shown in Fig. 9A, the V-phase bus bar 26V shown in Fig. 9C, and the U-phase bus bar 26U shown in Fig. 9E have the same basic structure. For example, a copper plate or a copper alloy plate is formed in a predetermined shape by punching, and a plurality of joints 44, which are joined to the terminals 36a, substantially vertically stand up from the inner peripheral side of a ring-shaped base portion 46 by bending. Further, in the case of the W-phase bus bar 26W, the power supply terminal 26Wa stands up from the outer periphery of a base portion 46 in the same direction as the joint 44. Likewise, the power supply terminal 26Va stands up from a base portion 46 in the case of the V-phase bus bar 26V, and the power supply terminal 26Ua stands up from a base portion 46 in the case of the U-phase bus bar 26U.

Meanwhile, it is preferable that the power supply terminals 26Wa, 26Va, and 26Ua be formed in a shape in which joining (for example, projection welding or the like) between the stator 16 and the brushless motor 10 is easily performed in consideration of a relationship of the wiring of a power supply line when the stator 16 is assembled into the brushless motor 10. Furthermore, it is preferable that the attitudes (directions or angles) of the power supply terminals 26Wa, 26Va, and 26Ua standing up from the base portions 46 be determined so that the power supply terminals are easily joined to the power supply line. In the case of this embodiment, the shape of a standing leg of each of the power supply terminals 26Wa, 26Va, and 26Ua is determined so that joint surfaces of the power supply terminals are present on the same plane (a plane parallel to the central axis of the rotating shaft 14).

In the case of this embodiment, the stator 16, which corresponds to three phases and has eighteen slots, is obtained as described above. Accordingly, the joints 44 of the W-phase bus bar 26W, the V-phase bus bar 26V, and the U-phase bus bar 26U are disposed at regular intervals (60°) from the positions of the power supply terminals 26Wa, 26Va, and 26Ua as reference. Accordingly, when the W-phase bus bar 26W, the V-phase bus bar 26V, and the U-phase bus bar 26U are laminated, the power supply terminals 26Wa, 26Ua, and 26Va are aligned in a lateral line so as to be adjacent to each other as shown in Fig. 8. Further, the eighteen joints 44 are aligned in the annular array direction of the stator pieces 24 without interfering with each other.

The insulating ring 42 shown in Fig. 9B insulates the W-phase bus bar 26W from the V-phase bus bar 26V, and is a ring-shaped member made of, for example, a polyamide resin. Likewise, the insulating ring 42 shown in Fig. 9D insulates the V-phase bus bar 26V from the U-phase bus bar 26U, and is a ring-shaped member made of, for example, a polyamide resin. The insulating ring 42 has substantially the same shape as the base portion 46 of the bus bar 26, and is adapted not to interfere with the joints 44, the power supply terminal 26Wa, and the like standing up from the base portion 46 of the bus bar 26 when being laminated. Meanwhile, an example in which the bus bar 26 and the insulating ring 42 are separately formed is shown in Figs. 9A to 9F. However, for example, the insulating ring 42 may be attached to the back side of the bus bar 26 (the side of the bus bar opposite to the side on which the joints 44 stand up) so that the insulating ring 42 and the bus bar 26 form an integrated component. Further, an insulating resin may adhere to the back side of the bus bar 26 by coating or the like. The bus bar 26 and the insulating ring 42 are integrated with each other in this way, which can contribute to the reduction of assembly man-hours or the number of components.

The positioning member 40 shown in Fig. 9F is a ring-shaped (annular) member made of, for example, a polyamide resin, and is inserted between the U-phase bus bar 26U and end faces of the stator pieces 24 and insulates the U-phase bus bar 26U from the end face of each stator piece 24 like the insulating ring 42. Further, the positioning member 40 includes alignment guide portions 48 that guide the array positions of the respective stator pieces 24 when the plurality of stator pieces 24 are aligned in an annular shape. Furthermore, the positioning member 40 includes phase determining portions 50 that determine the types of the phases of the respective phase coils 38 and the phases of the W-phase bus bar 26W, the V-phase bus bar 26V, and the U-phase bus bar 26U.

The alignment guide portion 48 includes an arm portion 48a that extends outward from the outer peripheral side of a ring-shaped base portion 52 of the positioning member 40 in a radial direction and a protruding portion 48b that protrudes toward the split insulator 34a of the stator piece 24 at an end portion of the arm portion 48a. In the case of this embodiment, eighteen alignment guide portions 48 of which the number is the same as the number of the stator pieces 24 are formed on the outer peripheral surface of the base portion 52 at regular intervals (20°). The details of the arm portion 48a and the protruding portion 48b of the alignment guide portion 48 will be described below.

Meanwhile, the phase determining portions 50 are formed on the inner peripheral side of the ring-shaped base portion 52 of the positioning member 40 and substantially vertically stand up from the base portion 52 toward the U-phase bus bar 26U. In the case of this embodiment, eighteen phase determining portions 50 of which the number is the same as the number of the stator pieces 24 are formed on the inner peripheral surface of the base portion 52 at regular intervals (20°). The details of the phase determining portion 50 will be described below.

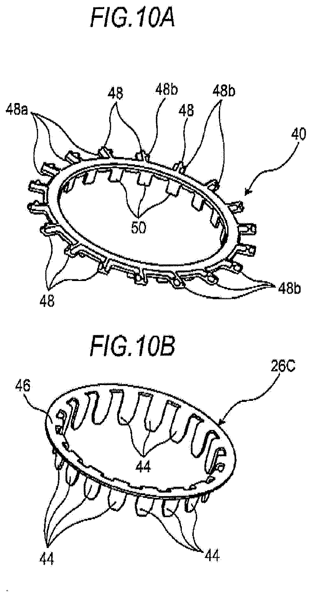

Figs. 10A and 10B are perspective views of the positioning member 40 (Fig. 10A) and the common bus bar 26C (Fig. 10B) that are used to integrate the plurality of stator pieces 24 in an annular shape and are disposed on the other end side of the stator pieces 24. The positioning member 40 is the same as the positioning member 40 described with reference to Fig. 9F, and the protruding portion 48b of the alignment guide portion 48 is shown so as to protrude upward in Fig. 10A. Accordingly, the positioning member 40 is inserted between the common bus bar 26C and the respective stator pieces 24, and insulates the common bus bar 26C from the respective stator pieces 24. Further, the positioning member 40 includes the alignment guide portions 48 that guide the array positions of the respective stator pieces 24 when the plurality of stator pieces 24 are aligned in an annular shape. The phase determining portions 50 are also formed on the positioning member 40 that is used together with the common bus bar 26C. Since one common bus bar 26C is provided apart from the other bus bars, the phase determining portions 50 are used to determine the phases of the terminals 36b and the common bus bar 26C. Meanwhile, since the phase matching of the common bus bar 26C and the terminals 36b are easily performed, the phase determining portions 50 may be omitted.

For example, after a copper plate or a copper alloy plate is punched in a predetermined shape, joints 44 are formed so as to substantially vertically stand up from the inner peripheral side of the base portion 46 by bending or the like. Accordingly, the common bus bar 26C shown in Fig. 10B is also formed in the same manner as other bus bars 26. Meanwhile, since the common bus bar 26C is connected to the common-side terminals 36b of all the phase coils 38, eighteen joints 44 are formed at regular intervals (20°). A plurality of common bus bars may be provided in other embodiments. For example, when three common bus bars are provided, joints 44 of the common bus bars are formed at an interval of 60° as in the W-phase bus bar 26W and the like and the common bus bars are laminated. In this case, an insulating ring 42 may be interposed or may not be interposed between the plurality of common bus bars. Further, in this case, the phase determining portions 50 of the positioning member 40 function to determine the phases of the plurality of common bus bars, Like other bus bars 26, the common bus bar 26C is also firmly joined to the terminals 36b by projection welding or the like.

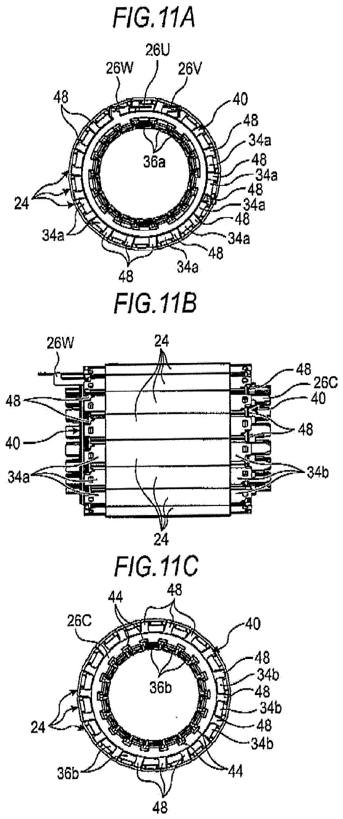

Figs. 11A to 11C are a top view, a side view, and a bottom view showing a state in which the stator pieces 24 are annularly arrayed and fixed by the respective bus bars 26. As shown in Figs. 11A to 11C, the alignment guide portions 48 of each positioning member 40 are inserted into spaces that are formed between the adjacent split insulators 34a or the adjacent split insulators 34b of the annularly arrayed stator pieces 24, and function to arrange the annular array of the stator pieces 24.

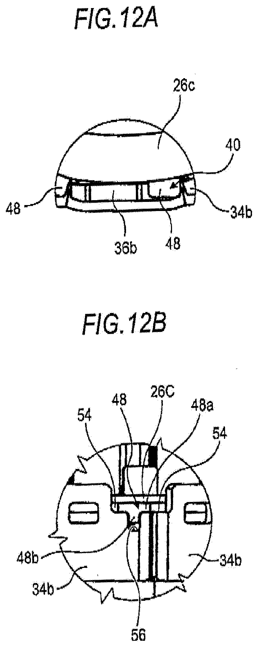

Figs. 12A and 12B are partially enlarged views illustrating the positioning attitude of the positioning member 40 provided on the side on which the common bus bar 26C is disposed. As shown in Figs. 12A, 12B, and 3, a first stepped portion 54 is formed on one side (right side in Fig. 12B) of an end portion of the split insulator 34b and a first stepped portion 54 and a second stepped portion 56, which is deeper than the first stepped portion 54, are formed on the other side thereof (left side in Fig. 12B). Further, when the stator pieces 24 are annularly arrayed, the first stepped portions 54 of the adjacent split insulators 34b have the same height and the arm portion 48a of the alignment guide portion 48 is seated on the first stepped portions 54 of the adjacent split insulators 34b. Furthermore, the protruding portion 48b of the alignment guide portion 48 is engaged with a groove that is formed by the second stepped portion 56 and the side surface of the adjacent split insulator 34b. Since the adjacent split insulators 34b and the alignment guide portion 48 are sequentially seated and engaged with each other as described above, the split insulators 34b, that is, the stator pieces 24 (the split cores 32) are annularly arrayed according to the pitch of the alignment guide portions 48 of the positioning member 40. The joints 44 of the common bus bar 26C are welded to the terminals 36b (see Fig. 11C) in this state, so that the fixing of one end of each stator piece 24 annularly arrayed is completed.

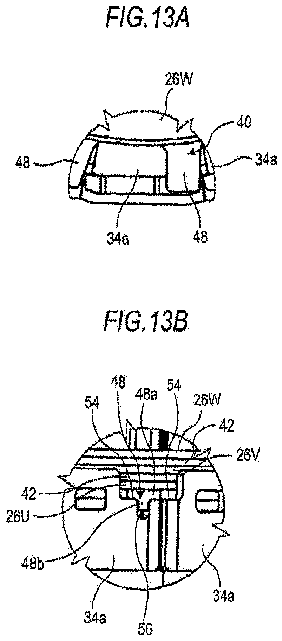

Figs. 13A and 13B are partially enlarged views illustrating the positioning attitude of the positioning member 40 provided on the side on which the W-phase bus bar 26W, the V-phase bus bar 26V, and the U-phase bus bar 26U are disposed. Even in this case, as shown in Figs. 13A, 13B, and 3, a first stepped portion 54 is formed on one side (right side in Fig. 13B) of an end portion of the split insulator 34a and a first stepped portion 54 and a second stepped portion 56, which is deeper than the first stepped portion 54, are formed on the other side thereof (left side in Fig. 13B). Further, when the stator pieces 24 are annularly arrayed, the first stepped portions 54 of the adjacent split insulators 34a have the same height and the arm portion 48a of the alignment guide portion 48 is seated on the first stepped portions 54 of the adjacent split insulators 34a. Furthermore, the protruding portion 48b of the alignment guide portion 48 is engaged with a groove that is formed by the second stepped portion 56 and the side surface of the adjacent split insulator 34a. Since the adjacent split insulators 34a and the alignment guide portion 48 are sequentially seated and engaged with each other as described above, the split insulators 34a, that is, the stator pieces 24 (the split cores 32), are annularly arrayed according to the pitch of the alignment guide portions 48 of the positioning member 40. In this state, the U-phase bus bar 26U is mounted at a position corresponding to the U-phase coil 38 and the terminals 36a are welded to the joints 44. Subsequently, the V-phase bus bar 26V is mounted at a position corresponding to the V-phase coil 38 with an insulating ring 42 interposed between the U-phase bus bar 26U and itself, and the terminals 36a are welded to the joints 44. In addition, the W-phase bus bar 26W is mounted with an insulating ring 42 interposed between the V-phase bus bar 26V and itself, and the joints 44 of the W-phase bus bar 26W are welded to the terminals 36a corresponding to the W-phase coil 38. Meanwhile, when the U-phase bus bar 26U, the V-phase bus bar 26V, and the W-phase bus bar 26W are laminated, the joints 44 of the respective bus bars 26 are positioned by the phase determining portions 50 protruding upward (toward the side on which the bus bars 26 are laminated) from the positioning member 40. In this case, when the joints 44 are positioned by the phase determining portions 50 while the power supply terminals 26Ua, 26Va, and 26Wa of the respective bus bars 26 are positioned so as to be linearly arrayed as shown in Fig. 8, the phase matching of the U-phase bus bar 26U, the V-phase bus bar 26V, and the W-phase bus bar 26W are easily completed.

When the joints 44 of the bus bars 26 are welded to the terminals 36a and 36b on both end sides of the plurality of stator pieces 24, which are annularly arrayed, as described above, the annular array of the stator pieces 24 integrated by being firmly joined is completed as shown in Fig. 11B, That is, each of the bus bars 26 can achieve both a function of supplying power to each phase coil 38 and a function of integrating the plurality of stator pieces 24. Further, it is possible to perform joining (welding), which achieves a power supply function and an integration function, in one step. As a result, it is possible to reduce man-hours in comparison with a case in which joining (welding) for achieving a power supply function and an integration function is performed in separate steps (two steps) as in the past. Furthermore, when the W-phase bus bar 26W, the V-phase bus bar 26V, and the U-phase bus bar 26U are disposed on one side of the annular array of the stator pieces 24 and the common bus bar 26C is disposed on the other side of the annular array, it is possible to increase a pitch of the joints 44 of each bus bar 26 in comparison with a case in which all bus bars are disposed on one side of the annular array. Accordingly, there is also an advantage of easily performing welding.

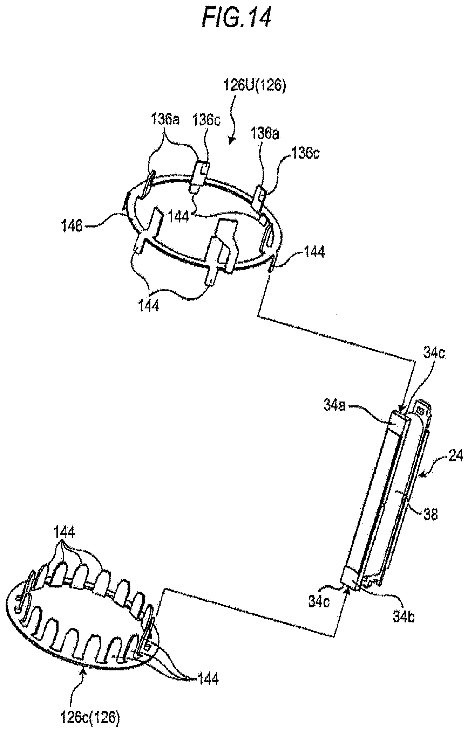

Fig. 14 is a view illustrating a modification of this embodiment. An example in which the split insulators 34a and 34b include the terminals 36a and 36b and the stator pieces 24 are joined to the bus bars 26 through the terminals 36a and 36b as shown in, for example, Fig. 3 and the like has been described in the above-mentioned embodiment. A modification shown in Fig. 14 is an example in which a bus bar 126 is directly joined to split insulators 34a and 34b, that is, stator pieces 24. In this example, for example, joints 144 of a U-phase bus bar 126U joined to the split insulators 34a extend toward the split insulators 34a from the outer peripheral side of a ring-shaped base portion 146. The joint 144 is fixed to a fixing hole 34c, which is formed at the split insulator 34a, by being press-fitted (adhered or welded) to the fixing hole 34c. Meanwhile, terminals 136a electrically connected to end portions of phase coils 38 stand up from the inner peripheral side of the base portion 146 in a direction opposite to the joints 144. Further, a hook portion 136c catching an end portion of the phase coil 38 is formed at each terminal 136a, and the end portion of the phase coil 38 is fused to the hook portion 136c. Other bus bars 126 also have the same structure as described above.

Furthermore, joints 144 are also formed at positions, which correspond to the fixing holes 34c of the split insulators 34b, on a common bus bar 126C. Moreover, when being joined to the stator piece 24, the joint 144 is fixed to the fixing hole 34c of the split insulator 34b by being press-fitted (adhered or welded) to the fixing hole 34c. Meanwhile, a common-side end portion of the phase coil 38 may be caught by the joint 144, and a terminal catching the end portion of the phase coil may be separately provided at the joint as in the U-phase bus bar 126U.

While removing the terminals 36a and 36b formed at the split insulators 34a and 34b in the modification shown in Fig. 14 as described above, it is possible to firmly fix the stator pieces 24, which are annularly arrayed, from both ends of the stator pieces 24 by the bus bars 126 and to maintain the annular array. That is, it is possible to contribute to the reduction of the number of components and the reduction of assembly man-hours. Meanwhile, an example in which the joints 144 and the terminals 136a are formed at the U-phase bus bar 126U (bus bar 126) has been shown in Fig. 14. However, the joint 144 may have the function of the terminal 136a, an end portion of the phase coil 38 may be caught by a part of the joint 144, and the terminal 136a may be omitted.

Although not shown in Fig. 14, a positioning member 40 is inserted between the U-phase bus bar 126U and the stator pieces 24 and between the common bus bar 126C and the stator pieces 24, positions the stator pieces 24, and insulates the stator pieces 24 from the U-phase bus bar 126U and the common bus bar 126C.

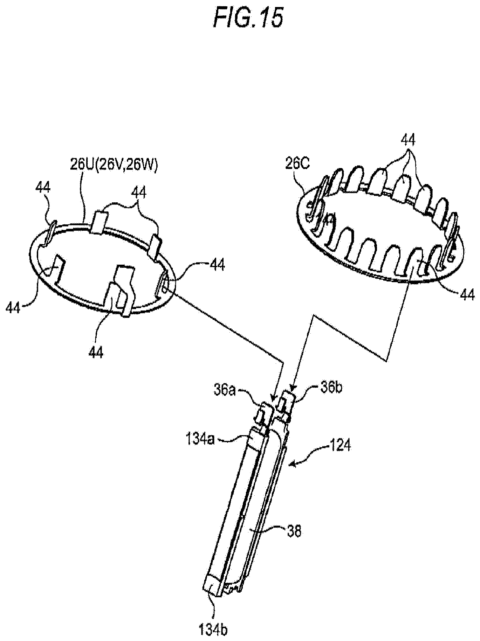

Fig. 15 is view illustrating another modification of this embodiment. In the structure shown in Fig. 6 and the like, the W-phase bus bar 26W, the V-phase bus bar 26V, and the U-phase bus bar 26U have been collectively disposed on one side of the stator pieces 24 and the common bus bar 26C has been disposed on the other side thereof. Meanwhile, Fig. 15 shows an example in which a common bus bar 26C and at least one of a U-phase bus bar 26U, a V-phase bus bar 26V, and a W-phase bus bar 26W are disposed so as to be laminated on one side of stator pieces 124. Fig. 15 shows an example in which the U-phase bus bar 26U and the common bus bar 26C are disposed on the same side. In this case, the basic structure of the stator piece 124 is the same as that of the example shown in Fig. 3, but is different from that of the example shown in Fig. 3 in that terminals 36a and 36b are disposed on one side, that is, on a split insulator 134a and a terminal 36b is not disposed on a split insulator 134b in the case of Fig. 15. For example, the terminal 36a, which is joined to the U-phase bus bar 26U, is firmly fixed to the inner peripheral side of the stator piece 124 by performing adhesion, welding, or the like after the terminal 36a is press-fitted or inserted into the inner peripheral side of the stator piece 124. Further, the terminal 36b, which is joined to the common bus bar 26C, is firmly fixed to the outer peripheral side of the stator piece 124 by performing adhesion, welding, or the like after the terminal 36b is press-fitted or inserted into the outer peripheral side of the stator piece 124. In this case, the same U-phase bus bar as the U-phase bus bar shown in Fig. 9E can be used as the U-phase bus bar 26U. Meanwhile, since the common bus bar 26C is disposed on the outer peripheral side of the U-phase bus bar 26U, the diameter of the common bus bar 26C is larger than the diameter of the U-phase bus bar 26U by a distance between the terminals 36a and 36b in a radial direction. The respective joints 44 are arrayed at regular intervals corresponding to a pitch of the stator pieces 124 in a circumferential direction when the stator pieces 124 are annularly arrayed.

When this stator piece 124 is used, various variations of the disposition of the respective bus bars 26 can be obtained. For example, the U-phase bus bar 26U and the common bus bar 26C are disposed on one side of the stator piece 124, and the W-phase bus bar 26W and the V-phase bus bar 26V are disposed on the other side thereof. In this case, only one terminal 36b is disposed on the other side of the stator piece 124 as in Fig. 3. Further, in another example, the V-phase bus bar 26V and the common bus bar 26C are disposed on one side of the stator piece 124 and the W-phase bus bar 26W and the U-phase bus bar 26U are disposed on the other side thereof. Furthermore, for example, the W-phase bus bar 26W and the common bus bar 26C are disposed on one side of the stator piece 124 and the U-phase bus bar 26U and the V-phase bus bar 26V are disposed on the other side thereof. Moreover, in another example, all the bus bars 26 (the U-phase bus bar 26U, the V-phase bus bar 26V, the W-phase bus bar 26W, and the common bus bar 26C) are disposed on one side of the stator piece 124. Further, a dummy bus bar having only a function of fixing the stator piece 124 (the dummy bus bar does not necessarily need to be a conductor and may be, for example, a resin material) may be disposed on the other side of the stator piece 124. Further, in another embodiment, when all the bus bars 26 (the U-phase bus bar 26U, the V-phase bus bar 26V, the W-phase bus bar 26W, and the common bus bar 26C) are disposed on one side of the stator piece 124 and the annular array of the stator pieces 24 can be sufficiently maintained and fixed, the stator pieces 124 are not fixed on the other side thereof and may be simply fixed (the annular array may be held) by, for example, an insulating cover 28b.

When this structure is used, the positions of the power supply terminal 26Ua, the power supply terminal 26Wa, the power supply terminal 26Va, and the common terminal can be selected according to the layout of a power supply line that supplies power to a brushless motor 10, which can contribute to an increase in the degree of freedom in the design of the brushless motor 10. Meanwhile, the terminal 36a for the U-phase bus bar 26U has been disposed on the inner peripheral side and the terminal 36b for the common bus bar 26C has been disposed on the outer peripheral side in the example of Fig. 15. However, the terminal 36a for the U-phase bus bar 26U may be disposed on the outer peripheral side and the terminal 36b for the common bus bar 26C may be disposed on the inner peripheral side. In this case, terminals 36a for the W-phase bus bar 26W and the V-phase bus bar 26V are also disposed on the outer peripheral side.

An inner rotor type brushless motor 10 has been described in each of the above-mentioned embodiment and modification. However, the structure of this embodiment can also be applied to an outer rotor type brushless motor and the same effects can be obtained.

Further, an example in which eighteen stator pieces 24 have been annularly arrayed has been described in each of the above-mentioned embodiment and modification, but the number of stator pieces 24 to be disposed can be appropriately selected according to the required performance of the brushless motor 10. For example, stator pieces 24 of which the number is a multiple of 3 can be annularly arrayed and the same effects can be obtained. In particular, when the number of stator pieces 24 to be arrayed is increased, it is possible to give a margin to the pitch of the joints 44 by distributing the respective bus bars 26 to both ends of the stator pieces 24. Accordingly, it is possible to release a limitation on size at the time of design and to contribute to the improvement of workability at the time of assembly.

Some embodiments disclosed here have been described, but these embodiments are exemplary and are not intended to limit the scope of this disclosure. These new embodiments can be embodied in other various ways, and may have various kinds of omission, substitution, and change without departing from the gist of this disclosure. These embodiments or modifications thereof are included in the scope or the gist of this disclosure, and are included in subject matters disclosed in the appended claims and the range equivalent thereto.

The principles, preferred embodiment and mode of operation of the present invention have been described in the foregoing specification. However, the invention which is intended to be protected is not to be construed as limited to the particular embodiments disclosed. Further, the embodiments described herein are to be regarded as illustrative rather than restrictive. The scope of the invention is defined by the attached claims.

## Claims

1. A rotary electric machine (10) comprising:
a stator (16) including a plurality of stator pieces (24) in which phase coils (38) are wound on teeth (32B) protruding from each of a plurality of split cores (32) and which are annularly arrayed around an axis in a circumferential direction; and
a rotor (12) that is disposed coaxially with the stator so as to face the stator,
wherein the stator includes a plurality of annular plate-shaped bus bars (26) that supply power to the phase coils corresponding to the kinds of phases, are joined to the plurality of stator pieces corresponding to the respective phases, and maintain an annular array of the plurality of split cores,
wherein the plurality of bus bars are disposed so as to be distributed on one end face and on the other end face of the stator,
**characterized in that**
the plurality of bus bars include a U-phase bus bar (26U), a V-phase bus bar (26V), a W-phase bus bar (26W), and a common bus bar (26C), and
the U-phase bus bar, the V-phase bus bar, and the W-phase bus bar are disposed on one of one end face and the other end face of the stator, and the common bus bar is disposed on the other side thereof
the rotary electric machine (10) further comprising:
an annular positioning member (40) that is inserted between the end face of the stator and the bus bar and includes alignment guide portions aligning the plurality of stator pieces, which form the stator, in an annular shape.

2. The rotary electric machine according to claim 1,
wherein the U-phase bus bar, the V-phase bus bar, the W-phase bus bar, and the common bus bar are joined to end portions of the phase coils, which serve as connection targets, on inner peripheral sides of the end faces of the stator.

3. The rotary electric machine according to claim 1 or 2,
wherein the stator pieces include insulators (34a, 34b) that support the phase coils, and terminals (36a, 36b) that are implanted in the insulators and are electrically connected to end portions of the phase coils, and
the bus bars include joints (44) that correspond to the positions of the phase coils serving as connection targets, the joints of the bus bars are joined to the terminals of the stator pieces corresponding to the phases, and the bus bars maintain the annular array of the plurality of split cores.

4. The rotary electric machine according to claim 1 or 2,
wherein the stator pieces include insulators (34a, 34b) that support the phase coils, and
the bus bars include joints (44) that correspond to the positions of the phase coils serving as connection targets, the joints of the bus bars are joined to a part of the insulators of the stator pieces corresponding to the phases, and the bus bars maintain the annular array of the plurality of split cores and are electrically connected to end portions of the phase coils corresponding to the joints.

## Patentansprüche

1. Drehende elektrische Maschine (10) mit:
einem Stator (16) mit einer Mehrzahl Statorstücke (24) in denen Phasenwicklungen (38) auf Zähne (32B) gewickelt sind, die von jedem einer Mehrzahl von geteilten Kernen (32) vorragen und die ringförmig um eine Achse in einer Umfangsrichtung feldartig angeordnet sind; und
einem Rotor (12), der koaxial mit dem Stator vorgesehen ist, um zu dem Stator gerichtet zu sein, wobei der Stator eine Mehrzahl ringförmige scheibenförmige Stromschienen (26), die Leistung zu den Phasenspulen entsprechend den Arten von Phasen zuführen, hat, die zu der Mehrzahl der Statorstücke entsprechend den entsprechenden Phasen gefügt sind, und ein ringförmiges Feld der Mehrzahl der geteilten Kerne beibehält,
wobei die Mehrzahl der Stromschienen so vorgesehen sind, dass sie auf einer Endfläche und der anderen Endfläche des Stators verteilt sind,
**dadurch gekennzeichnet, dass**
die Mehrzahl der Stromschienen eine U-Phasenstromschiene (26U), eine V-Phasenstromschiene (26V), eine W-Phasenstromschiene (26W) und eine gemeinsame Stromschiene (26C) haben, und
die U-Phasenstromschiene, die V-Phasenstromschiene und die W-Phasenstromschiene auf einer von einer Endfläche und der anderen Endfläche des Stators vorgesehen sind, und die gemeinsame Stromschiene auf der anderen Seite davon vorgesehen ist,
wobei die drehende elektrische Maschine außerdem umfasst:
ein ringförmiges Positionierungselement (40), das zwischen die Endfläche des Stators und die Stromschiene eingefügt ist, und Ausrichtungsführungsabschnitte hat, die die Mehrzahl der Statorstücke, die den Stator ausbilden, in einer ringförmigen Form ausrichten.

2. Drehende elektrische Maschine nach Anspruch 1,
wobei die U-Phasenstromschiene, die V-Phasenstromschiene, die W-Phasenstromschiene und die gemeinsame Stromschiene an Endabschnitte der Phasenspulen auf inneren Randseiten der Endflächen des Stators gefügt sind, die als Verbindungsziele dienen.

3. Drehende elektrische Maschine nach Anspruch 1 oder 2,
wobei die Statorstücke Isolatoren (34a, 34b) haben, die die Phasenspulen lagern, und Anschlüsse (36a, 36b), die in die Isolatoren implantiert sind und elektrisch mit Endabschnitten der Phasenspulen verbunden sind, und
die Stromschienen Laschen (44) haben, die den Positionen der Phasenspulen entsprechen, die als Verbindungsziele dienen, wobei die Laschen der Stromschienen mit den Anschlüssen der Statorstücke entsprechend den Phasen gefügt sind, und die Stromschienen das ringförmige Feld der Mehrzahl der geteilten Kerne beibehalten.

4. Drehende elektrische Maschine nach Anspruch 1 oder 2,
wobei die Statorstücke Isolatoren (34a, 34b) haben, die die Phasenspulen lagern, und
die Stromschienen Laschen (44) haben, die den Positionen der Phasenspulen entsprechen, die als die Verbindungsziele dienen, wobei die Laschen der Stromschienen mit einem Teil der Isolatoren der Statorstücke entsprechend den Phasen gefügt sind, und die Stromschienen das ringförmige Feld der Mehrzahl der geteilten Kerne beibehalten und elektrisch mit Endabschnitten der Phasenspulen entsprechend den Laschen gefügt sind.

## Revendications

1. Machine électrique rotative (10) comprenant :
un stator (16) incluant une pluralité de pièces de stator (24) où des bobines de phase (38) sont enroulées sur des dents (32B) faisant saillie depuis un chacun de pluralité de corps de fractionnement (32) et qui sont agencées en réseau de façon annulaire autour d'un axe dans une direction circonférentielle ; et
un rotor (12) qui est disposé coaxialement au stator de manière à faire face au stator,
dans lequel le stator inclut une pluralité de barres omnibus annulaires en forme de plaques (26) qui fournissent de l'énergie aux bobines de phase correspondant aux types de phases, sont reliées à la pluralité de pièces de stator correspondant aux phases respectives, et maintiennent un agencement annulaire en réseau de la pluralité de corps de fractionnement,
dans lequel la pluralité de barres omnibus sont disposées de manière à être distribuées sur une face d'extrémité et sur l'autre face d'extrémité du stator,
**caractérisé en ce que**
la pluralité de barres omnibus inclut une barre omnibus de phase U (26U), une barre omnibus de phase V (26V), une barre omnibus de phase W (26W) et une barre omnibus commune (26C), et
la barre omnibus de phase U, la barre omnibus de phase V, et la barre omnibus de phase W sont disposées sur l'une parmi une face d'extrémité et l'autre face d'extrémité du stator, et la barre omnibus commune est disposée sur l'autre côté de celle-ci
la machine électrique rotative (10) comprenant de plus :
un élément de positionnement annulaire (40) qui est inséré entre la face d'extrémité du stator et la barre omnibus, et inclut des parties de guidage d'alignement alignant la pluralité de pièces de stator, qui forment le stator, pour donner une forme annulaire.

2. Machine électrique rotative selon la revendication 1,
dans laquelle la barre omnibus de phase U, la barre omnibus de phase V, la barre omnibus de phase W, et la barre omnibus commune sont reliées à des parties d'extrémité des bobines de phase, qui servent de cibles de connexion, sur des côtés périphériques intérieurs des faces d'extrémité du stator.

3. Machine électrique rotative selon la revendication 1 ou 2,
dans laquelle les pièces de stator incluent des isolateurs (34a, 34b) qui soutiennent les bobines de phase, et des bornes (36a, 36b) qui sont implantées dans les isolateurs et sont électriquement raccordées à des parties d'extrémité des bobines de phase, et
les barres omnibus incluent des joints (44) qui correspondent aux positions des bobines de phase servant de cibles de connexion, les joints des barres omnibus sont reliés aux bornes des pièces de stator correspondant aux phases, et les barres omnibus maintiennent l'agencement annulaire en réseau de la pluralité de corps de fractionnement.

4. Machine électrique rotative selon la revendication 1 ou 2,
dans laquelle les pièces de stator incluent des isolateurs (34a, 34b) qui soutiennent les bobines de phase, et
les barres omnibus incluent des joints (44) qui correspondent aux positions des bobines de phase servant de cibles de connexion, les joints des barres omnibus sont reliés à une partie des isolateurs des pièces de stator correspondant aux phases, et les barres omnibus maintiennent l'agencement annulaire en réseau de la pluralité de corps de fractionnement et sont électriquement raccordées à des parties d'extrémité des bobines de phase correspondant aux joints.
